# EUROPÄISCHE PATENTANMELDUNG

(11) **EP 4 279 207 A1**
(43) Veröffentlichungstag der Anmeldung: **22.11.2023**
(21) Anmeldenummer: 22020230.3
(22) Anmeldetag: 20.05.2022
(51) Int. Cl.: B23K 9/02, B23K 9/04, B23K 9/095, B23K 9/16, B23K 9/23, B23K 9/235, B23K 31/12, B33Y 10/00, B23K 103/10

(54) **VERFAHREN UND VORRICHUNG ZUM BEARBEITEN ODER HERSTELLEN EINES WERKSTÜCKS MITTELS EINES LICHTBOGENS**

(71) Anmelder: Linde GmbH, 82049 Pullach (DE)
(72) Erfinder: Wimmer, Georg, 82049 Pullach (DE); Kartmann, Eduard, 82049 Pullach (DE)
(74) Vertreter: Meilinger, Claudia Sabine

(57) **Zusammenfassung**

Die vorliegende Erfindung betrifft ein Verfahren und ein Vorrichtung (100) zum Bearbeiten oder Herstellen eines Werkstücks (101) mittels eines Lichtbogens, umfassend die Schritte: Anordnen wenigstens eines Lichtbogenbrenners (110) in einem vorgegebenen Abstand zu einem Schweißbrenner (120); Erzeugen jeweils eines ersten Lichtbogens (111) zwischen dem Werkstück (101) und dem wenigstens einen Lichtbogenbrenner (110) und Erwärmen eines vorgegebenen Bereichs des Werkstücks (101) durch den ersten Lichtbogen (111) auf eine vorgegebene Temperatur unterhalb der Schmelztemperatur des Werkstücks (101); Erzeugen eines zweiten Lichtbogens (121) zwischen dem Werkstück (101) und dem Schweißbrenner (120), so dass zumindest ein Teil des auf die vorgegebene Temperatur erwärmten vorgegebenen Bereichs des Werkstücks (101) durch den zweiten Lichtbogen (121) zumindest teilweise aufgeschmolzen wird.

## Beschreibung

Die Erfindung betrifft ein Verfahren und eine Vorrichtung zum Bearbeiten oder Herstellen eines Werkstücks mittels eines Lichtbogens.

### Stand der Technik

Zum Bearbeiten oder Herstellen von Werkstücken mittels eines Lichtbogens können Schweißbrenner verwendet werden, wobei das Werkstück und eine Elektrode des Schweißbrenners elektrisch bestromt werden, so dass ein Lichtbogen zwischen dem Werkstück und der Elektrode erzeugt werden kann. Das Werkstück wird durch den Lichtbogen zumindest teilweise aufgeschmolzen und bildet dort ein Schmelzbad. Es besteht der Wunsch, den Schweißvorgang möglichste effizient zu gestalten.

### Offenbarung der Erfindung

Vor diesem Hintergrund werden ein Verfahren und eine Vorrichtung zum Bearbeiten oder Herstellen eines Werkstücks mittels eines Lichtbogens mit den Merkmalen der unabhängigen Patentansprüche vorgeschlagen. Vorteilhafte Ausgestaltungen sind Gegenstand der Unteransprüche sowie der nachfolgenden Beschreibung. Vorteile und vorteilhafte Ausgestaltungen des erfindungsgemäßen Verfahrens und der erfindungsgemäßen Vorrichtung ergeben sich aus der vorliegenden Beschreibung in entsprechender Weise.

Im Rahmen der vorliegenden Erfindung wird wenigstens ein Lichtbogenbrenner in einem vorgegebenen Abstand zu einem Schweißbrenner angeordnet. Beispielsweise kann ein derartiger Lichtbogenbrenner in dem vorgegebenen Abstand vorgesehen sein oder es können auch mehrere Lichtbogenbrenner vorgesehen sein, jeweils in einem individuellen vorgegebenen Abstand zu dem Schweißbrenner.

Zwischen dem Werkstück und dem wenigstens einen Lichtbogenbrenner wird jeweils ein erster Lichtbogen bzw. Vorwärm-Lichtbogen erzeugt. Ein vorgegebener Bereich des Werkstücks wird durch den ersten Lichtbogen auf eine vorgegebene Temperatur unterhalb der Schmelztemperatur des Werkstücks erwärmt bzw. vorgewärmt. In diesem vorgegebenen Bereich wird das Werkstück durch den ersten Lichtbogen also erwärmt, aber nicht aufgeschmolzen. Wenn mehrere Lichtbogenbrenner vorgesehen sind, wird insbesondere zwischen jedem dieser Lichtbogenbrenner und dem Werkstück jeweils ein erster Lichtbogen erzeugt, so dass mehrere derartige vorgegebene Bereiche jeweils auf eine individuelle vorgegebene Temperatur unterhalb der Schmelztemperatur des Werkstücks vorgewärmt werden, wobei der Begriff "Temperatur" auch ein Temperaturprofil über den zu erwärmenden Bereich umfasst.

Zwischen dem Werkstück und dem Schweißbrenner wird ein zweiter Lichtbogen bzw. ein Arbeits-Lichtbogen oder Bearbeitungs-Lichtbogen erzeugt, so dass der auf die vorgegebene Temperatur erwärmte vorgegebene Bereich des Werkstücks bzw. zumindest ein Teil dieses Bereichs durch den zweiten Lichtbogen aufgeschmolzen wird. Durch den zweiten Lichtbogen wird zumindest dieser Teil des vorgegebenen Bereichs auf eine Temperatur oberhalb der Schmelztemperatur des Werkstücks erhitzt. In diesem vorgegebenen Bereich wird dann durch den zweiten Lichtbogen ein Schmelzbad aus schmelzflüssigem Material des Werkstücks erzeugt.

In dem vorliegenden Zusammenhang sei als Schweißbrenner und als Lichtbogenbrenner jeweils ein Brenner zu verstehen, wobei eine Spannung zwischen einer Elektrode bzw. Drahtelektrode des jeweiligen Brenners und dem Werkstück angelegt wird, so dass ein jeweiliger Lichtbogen zwischen dieser Elektrode und dem Werkstück erzeugt bzw. gezündet werden kann. Der Schweißbrenner wird derart betrieben, dass durch den zweiten Lichtbogen derart Energie in das Werkstück eingebracht wird, dass sich das Werkstück um einen Auftreffpunkt des zweiten Lichtbogens herum so weit erhitzt bis das Material des Wertstücks dort aufgeschmolzen wird und ein Schmelzbad aus flüssigem Schweißgut erzeugt wird. Im Gegensatz wird der Lichtbogenbrenner derart betrieben, dass durch den ersten Lichtbogen weniger Energie in das Werkstück eingebracht wird als durch den zweiten Lichtbogen, so dass das Werkstück durch den ersten Lichtbogen nur erhitzt, jedoch nicht aufgeschmolzen wird. Der Lichtbogenbrenner und der Schweißbrenner können insbesondere einander entsprechend ausgebildet sein bzw. baugleiche Brenner sein, jedoch unterschiedlich betrieben werden, so dass es durch den Betrieb des Schweißbrenners zum Aufschmelzen des Werkstücks kommt und durch den Betrieb des Lichtbogenbrenners zu keinem Aufschmelzen des Werkstücks. Ferner können der Lichtbogenbrenner und der Schweißbrenner auch unterschiedlich ausgestaltete Brenner bzw. Brenner unterschiedlichen Typs sein.

Der vorliegenden Erfindung liegt die Erkenntnis zugrunde, zusätzlich zu dem eigentlichen Schweißbrenner, welcher zum Herstellen bzw. Bearbeiten des Werkstücks vorgesehen ist, wenigstens einen weiteren Lichtbogenbrenner zum Vorwärmen des Werkstücks zu verwenden. Der Schweißbrenner bzw. der von dem Schweißbrenner erzeugte zweite Lichtbogen sind zum eigentlichen Bearbeiten bzw. Herstellen des Werkstücks vorgesehen, im Zuge dessen das Material des Werkstücks entsprechend aufgeschmolzen wird. Der Lichtbogenbrenner bzw. der von diesem Lichtbogenbrenner erzeugte erste Lichtbogen bzw. Aufwärm-Lichtbogen sind hingegen dazu vorgesehen, das Material des Werkstücks in dem vorgegebenen Bereich auf eine gewünschte Temperatur vorzuwärmen, bevor das Werkstück dort mittels des Schweißbrenners bzw. des zweiten Lichtbogens aufgeschmolzen wird.

Je nach Werkstoffzusammensetzung des zu schweißenden Werkstücks kann es hilfreich sein, das Werkstück vor dem eigentlichen Schweißprozess vorzuwärmen, um Eigenschaften des Schweißprozesses und der im Zuge des Schweißprozesses erzeugten Schweißnaht positiv beeinflussen zu können. Auf herkömmliche Weise kann sich ein derartiges Vorwärmen oftmals als aufwendig und kostenintensiv erweisen. Beispielsweise kann eine Autogenflamme verwendet werden, z.B. eine Acetylen-Sauerstoffflamme, um das Werkstück zu erwärmen, was jedoch mit hohen Kosten verbunden ist. Zudem können bei einem derartigen Vorwärmen durch Flammen nitrose Gase entstehen. Ferner kann auf herkömmliche Weise ein induktives Vorwärmen des Werkstücks vorgenommen werden, was jedoch in vielen Fällen impraktikabel sein kann. Oftmals besteht zwar die Möglichkeit, Helium oder ein heliumhaltiges Gas als Schutzgas beim Schweißprozess zu verwenden, wodurch bereits durch den Schweißprozess selbst ausreichend Wärme in den Schweißbereich eingebracht werden kann, jedoch ist Helium teuer und zeitweise nur begrenzt erhältlich.

Im Gegensatz dazu stellt die vorliegende Erfindung eine Möglichkeit bereit, um auf aufwandsarme, praktikable und kostengünstige Weise das Werkstück vor dem Schweißprozess ausreichend vorzuwärmen, so dass Eigenschaften des Schweißprozesses und der im Zuge des Schweißprozesses erzeugten Schweißnaht positiv beeinflusst werden können. Durch den Lichtbogenbrenner kann zweckmäßigerweise ausreichend Wärme in den zu schweißenden Bereich bzw. den Schweißnahtbereich eingebracht werden, so dass während des Schweißprozesses insbesondere keine zusätzliche Wärmequelle erforderlich ist, z.B. keine Autogenflamme. Durch die Verwendung des Lichtbogenbrenners kann insbesondere auf die Verwendung von kostenintensiven Vorwärmmethoden, z.B. mittels Autogenflamme oder induktivem Vorwärmen, verzichtet werden. Ferner ist es durch das ausreichende Vorwärmen mittels des Lichtbogenbrenners in der Regel nicht mehr nötig, Helium oder ein heliumhaltiges Gas als Schutzgas zu verwenden, so dass Kosten eingespart werden können.

Je nach Werkstoffzusammensetzung des Werkstücks kann sich auf der Oberfläche des Werkstücks durch Reaktion mit Sauerstoff eine Oxidschicht bzw. Oxidhaut bilden. Beispielsweise kann sich auf Werkstücken, die aus Aluminium oder einer Aluminiumlegierung gefertigt sind, schnell eine dicke Oxidschicht aus Aluminiumoxid Al₂O3 bilden, da Aluminium schnell mit Sauerstoff reagiert. Derartige Oxidschichten auf dem zu schweißenden Werkstück können jedoch die Qualität des Schweißprozesses bzw. der erzeugten Schweißnaht negativ beeinflussen, da durch eine derartige Oxidschicht nicht ausreichend Energie in das Werkstück eingebracht werden kann, um eine Schweißnaht mit hoher Qualität zu erzeugen. Durch den Vorwärm-Lichtbogen des Lichtbogenbrenners kann eine derartige Oxidschicht besonders zweckmäßig vor dem eigentlichen Schweißprozess zerstört, aufgebrochen bzw. aufgeschmolzen werden, so dass durch den Schweißprozess mittels des Schweißbrenners ausreichend Energie in das Werkstück eingebracht werden kann und eine Schweißnaht mit hoher Qualität erzeugt werden kann.

Beispielsweise kann sich eine derartige Oxidschicht beim Mehrlagenschweißen als problematisch erweisen. Wenn beispielsweise auf einer Schweißnaht oder Schweißraupe eine Oxidschicht entsteht, auf welcher im Zuge des Mehrlagenschweißens eine weitere Schweißnaht erzeugt werden soll, kann es zu Lagenbindefehlern kommen. Da derartige Oxidschichten durch den Vorwärm-Lichtbogen des Lichtbogenbrenners vor dem Schweißprozess zweckmäßigerweise zerstört werden können, kann die Gefahr von Lagenbindefehlern insbesondere beim Mehrlagenschweißen erheblich reduziert oder minimiert werden.

Beispielsweise können die Anzahl der Lichtbogenbrenner, der jeweilige Abstand der einzelnen Lichtbogenbrenner zu dem Schweißbrenner und ferner gegebenenfalls ein Muster, gemäß welchem die einzelnen Lichtbogenbrenner relativ zu dem Schweißbrenner angeordnet sind, abhängig von dem zu schweißenden Werkstück bzw. von Eigenschaften oder Materialeigenschaften des Werkstücks gewählt werden, z.B. abhängig von einer Dicke des Werkstücks, dem speziellen Material bzw. der speziellen Materialzusammensetzung des Werkstücks usw. So können beispielsweise abhängig von der Werkstückdicke mehrere Lichtbogenbrenner derart relativ zu dem Schweißbrenner angeordnet werden, dass auch für dickwandige Bauteile ein entsprechend großer Schweißbereich ausreichend vorgewärmt werden kann.

In einer Ausführungsform wird der Schweißbrenner in einer Bewegungsrichtung bzw. Schweißrichtung parallel zu der Werkstückoberfläche und relativ zu dem Werkstück bewegt. Der wenigstens einen Lichtbogenbrenner wird insbesondere in der Bewegungsrichtung und relativ zu dem Werkstück in dem vorgegebenen Abstand vor dem Schweißbrenner bewegt. Beispielsweise können der Schweißbrenner und der wenigstens eine Lichtbogenbrenner jeweils tatsächlich bewegt werden und das Werkstück kann fest bzw. fixiert sein. Umgekehrt kann beispielsweise auch das Werkstück tatsächlich bewegt werden und der Schweißbrenner und der wenigstens eine Lichtbogenbrenner können jeweils fest bzw. fixiert sein. Ferner können beispielsweise auch sowohl das Werkstück als auch der Schweißbrenner und der wenigstens eine Lichtbogenbrenner relativ zueinander tatsächlich bewegt werden.

Bei tatsächlicher Bewegung der einzelnen Brenner kann insbesondere jeder Lichtbogenbrenner in konstantem Abstand oder zumindest im Wesentlichen konstanten Abstand vor dem Schweißbrenner über das Werkstück bewegt werden. Die Bewegung jedes Lichtbogenbrenners, insbesondere die Bewegungsrichtung und Bewegungsgeschwindigkeit, entspricht insbesondere der Bewegung des Schweißbrenners, zumindest im Wesentlichen. Durch derartiges Führen des Lichtbogenbrenners oder der Lichtbogenbrenner im Vorlauf zu dem Schweißbrenner kann insbesondere stets ein ausreichendes Vorwärmen des unmittelbar vor dem Schweißbrenner liegenden und als nächstes zu schweißenden Bereichs erreicht werden.

In einer Ausführungsform erfolgt das Bewegen des Schweißbrenners derart, dass der Schweißbrenner auf den durch den ersten Lichtbogen auf die vorgegebene Temperatur erwärmten vorgegebenen Bereich zu bewegt wird. Der Lichtbogenbrenner oder die Lichtbogenbrenner und der Schweißbrenner können somit besonders zweckmäßig derart angeordnet und bewegt werden, dass der vorgegebene Bereich mittels des ersten Lichtbogens oder der ersten Lichtbögen zunächst ausreichend vorgewärmt werden kann, bevor der oder die Lichtbogenbrenner von diesem Bereich wegbewegt werden und der Schweißbrenner zu diesem vorgewärmten Bereich hinbewegt wird. Anschließend kann in diesem vorgewärmten Bereich mittels des Schweißbrenners ein Schweißvorgang mit ausreichender Qualität durchgeführt werden.

In einer Ausführungsform wird der erste Lichtbogen zwischen dem Werkstück und dem wenigstens einen Lichtbogenbrenner jeweils unter Verwendung von Wechselstrom erzeugt. Die Elektrode des jeweiligen Lichtbogenbrenners und das Werkstück werden zweckmäßigerweise mit einer Wechselstromquelle elektrisch verbunden. Alternativ wird der erste Lichtbogen zwischen dem Werkstück und dem wenigstens einen Lichtbogenbrenner insbesondere durch Erzeugen einer Pluspolung der Elektrode des wenigstens einen Lichtbogenbrenners erzeugt. Die Elektrode des Lichtbogenbrenners und das Werkstück werden in diesem Fall zweckmäßigerweise derart mit einer Gleichstromquelle elektrisch verbunden, dass die Elektrode als Pluspol bzw. Anode dient und das Werkstück als Kathode bzw. Minuspol. Durch derartig erzeugte Aufwärm-Lichtbögen können Oxidschichten auf dem Werkstück besonders effektiv zerstört werden.

Gemäß einer Ausführungsform wird eine Überprüfungseinheit in einem zweiten vorgegebenen Abstand zu dem Schweißbrenner angeordnet und es wird eine Überprüfung des Werkstücks auf bindeschwache Zonen bzw. auf Schweißgutüberläufe mit Hilfe der Überprüfungseinheit durchgeführt. Beispielsweise können am Rand von Schweißnähten bzw. Schweißraupen, etwa beim Mehrlagenschweißen, nicht mit dem Untergrund verschmolzene Bereiche durch Schweißgutüberläufe entstehen. Derartige Bereiche mit Schweißgutüberläufen stellen bindeschwache Zonen dar, welche, wenn sie während des Schweißprozesses nicht erkannt und komplett aufgeschmolzen werden, zu Bindefehlern führen können. Mit Hilfe des Lichtbogenbrenners und der Überprüfungseinheit können derartige Stellen mit Schweißgutüberläufen bzw. bindeschwachen Zonen frühzeitig erkannt werden und es kann auf diese erkannten Stellen reagiert werden, z.B. um diese Stellen vollständig aufzuschmelzen.

Herkömmlicherweise können derartige Stellen mit Schweißgutüberläufen bzw. bindeschwachen Zonen oftmals nicht erkannt werden, beispielsweise weder visuell durch einen Benutzer noch durch Kameras oder Ultraschall-Prüfköpfe. Daher wird auf herkömmliche Weise, um derartige Stellen zu vermeiden, oftmals der Schweißraupenrand bzw. Schweißnahtrand im Vorlauf vor dem Schweißprozess durch eine weitere Person zusätzlich zu dem Bediener des Schweißbrenners geschliffen. Ein derartiges Schleifen ist jedoch aufwendig und kostenintensiv und sollte auch aus (arbeits-) hygienischen Gründen vermieden werden. Im Gegensatz dazu können Stellen mit Schweißgutüberläufen bzw. bindeschwachen Zonen mit Hilfe des Lichtbogenbrenners und der Überprüfungseinheit während des laufenden Schweißprozesses auf einfache und zuverlässige Weise detektiert werden. Durch den Vorwärm-Lichtbogen treten Schweißgutüberläufe und bindeschwache Zonen bei gezielter Anstellung des Lichtbogenbrenners beispielsweise am Rand von darunterliegenden Schweißnähten bzw. Schweißraupen deutlich zu Tage, da sich derartige bindeschwache Zonen durch Hitzeeinwirkung leicht öffnen. Derartig geöffnete Stellen können dann mit Hilfe der Überprüfungseinheit erkannt werden. Beispielsweise kann der Bediener des Schweißbrenners bei einer erkannten derartigen Stelle benachrichtigt werden, z.B. durch ein akustisches und/oder visuelles Signal und/oder durch eine automatische Markierung in einem Bereich der detektierten Stelle. Aufwendiges Schleifen von Raupenrändern bzw. Schweißnahträndern kann somit entfallen.

In einer Ausführungsform wird die Überprüfungseinheit zwischen dem wenigstens einen Lichtbogenbrenner und dem Schweißbrenner angeordnet. Da sich Schweißgutüberläufe bzw. bindeschwache Zonen durch den Vorwärm-Lichtbogen des Lichtbogenbrenners leicht öffnen, können diese durch die nachfolgende Überprüfungseinheit zuverlässig erkannt werden, wobei die Überprüfungseinheit insbesondere als eine Kamera bzw. Vorlaufkamera und/oder als eine Wirbelstrom-Überprüfungseinheit und/oder als eine Ultraschall-Überprüfungseinheit ausgebildet ist.

In einer Ausführungsform werden wenigstens zwei Lichtbogenbrenner als der wenigstens eine Lichtbogenbrenner in einem vorgegebenen Muster relativ zu dem Schweißbrenner angeordnet. Beispielsweise kann dieses Muster abhängig von dem zu schweißenden Werkstück bzw. von Eigenschaften oder Materialeigenschaften des Werkstücks gewählt werden, insbesondere abhängig von einer Dicke des Werkstücks und/oder dem speziellen Material bzw. Werkstoff des Werkstücks. Zweckmäßigerweise wird dieses Muster derart vorgegeben, dass abhängig von Materialdicke und Materialzusammensetzung des Werkstücks ein bestmögliches Vorwärmen des zu schweißenden Bereichs ermöglicht werden kann.

In einer Ausführungsform wird der Schweißbrenner und/oder der wenigstens eine Lichtbogenbrenner jeweils mit Argon oder einem argonhaltigen Gasgemisch als Schutzgas betrieben. Insbesondere kann somit Argon als ein kostengünstiges Schutzgas für einzelne oder alle Brenner verwendet werden. Es ist zweckmäßigerweise nicht nötig, teures und begrenzt erhältliches Helium für das Schutzgas zu verwenden, da das Werkstück durch die Lichtbogenbrenner ausreichend vorgewärmt wird und ein Erwärmen des Werkstücks durch Helium oder ein heliumhaltiges Gasgemisch als Schutzgas nicht nötig ist.

Gemäß einer Ausführungsform wird zum Bearbeiten des Werkstücks ein Lichtbogenschweißprozess durchgeführt. Insbesondere kann das Werkstück auf diese Weise mit einem oder mehreren weiteren bzw. angrenzenden Werkstücken stoffschlüssig verbunden werden. Der Schweißbrenner ist zu diesem Zweck als ein entsprechender Lichtbogenschweißbrenner ausgebildet. Durch den mittels des Schweißbrenners erzeugten zweiten Lichtbogen werden das Werkstück und das mit diesem Werkstück zu verbindende weitere Werkstück entsprechend aufgeschmolzen und stoffschlüssig verbunden.

Insbesondere wird als Lichtbogenschweißprozess ein Metall-Schutzgas-Schweißprozess (MSG-Schweißprozess), ein Metall-Aktivgas-Schweißprozess (MAG-Schweißprozess), ein Metall-Inertgas-Schweißprozess (MIG-Schweißprozess), ein Metall-Inertgas-Dickdraht-Schweißprozess (MIG-Dickdraht-Schweißprozess), ein Metall-Inertgas-Hochstrom-Schweißprozess, ein Wolfram-Inertgas-Schweißprozess (WIG-Schweißprozess) oder ein Plasma-Schweißprozess durchgeführt.

Bei einem Metall-Schutzgas-Schweißprozess wird ein Schutzgas um eine abschmelzende Elektrode herum zugeführt. Je nachdem, ob ein aktives Gas oder ein inertes Gas als Schutzgas zugeführt wird, handelt es sich um einen Metall-Aktivgas-Schweißprozess (MAG-Schweißprozess) bzw. einen Metall-Inertgas-Schweißprozess (MIG-Schweißprozess).

Bei einem Metall-Aktivgas-Schweißprozess (MAG-Schweißprozess) wird ein aktives, reaktionsfreudiges Gas als Schutzgas verwendet, welches die abschmelzende Elektrode des Schweißbrenners und das Schmelzbad umströmt. Durch die Zusammensetzung des speziellen verwendeten aktiven Gases können Eigenschaften und Zusammensetzung des Schmelzbades und der Schweißnaht gezielt beeinflusst werden. Beispielsweise können als derartige aktive Schutzgase Kohlendioxid oder ein Gemisch aus Argon mit Kohlendioxid und/oder Sauerstoff verwendet werden.

Bei einem Metall-Inertgas-Schweißprozess wird ein inertes Gas als Schutzgas verwendet, welches die Elektrode des Schweißbrenners und das Schmelzbad umströmt. Das inerte Gas geht insbesondere keine chemischen Reaktionen mit dem Schmelzbad ein und schirmt das Schmelzbad gegen ungewünschte chemische Reaktionen ab. Die Elektrode des Schweißbrenners schmilzt beim MIG-Schweißen insbesondere mit ab, so dass schmelzflüssige Tropfen des Elektrodenmaterials in das Schmelzbad übergehen.

Beim MIG-Schweißprozess werden typischerweise vergleichsweise dünne Drahtelektroden mit einem Durchmesser von bis zu 1,6 mm verwendet. Beim MIG-Dickdraht-Schweißprozess handelt es sich um einen MIG-Schweißprozess mit einer vergleichsweise dicken Drahtelektrode von über 1,6 mm, z.B. von bis zu 6 mm. Beim MIG-Hochstrom-Schweißen können Schweißströme von beispielsweise bis zu 1 kA eingesetzt werden. Auch hier werden insbesondere vergleichsweise dicke Drahtelektrode verwendet, z.B. mit Durchmessern zwischen 6 mm und 12 mm.

Beim Wolfram-Inertgas-Schweißen wird wie beim MIG-Schweißen ein inertes Gas als Schutzgas zugeführt. Der entsprechende Lichtbogen wird beim WIG-Schweißen zwischen dem Werkstück und einer Elektrode aus Wolfram erzeugt, wobei diese Wolframelektrode aufgrund des hohen Schmelzpunktes von Wolfram nicht abschmilzt. Ein Zusatzwerkstoff kann in Form von Drähten oder Stäben in den Lichtbogen gebracht werden, um von diesem geschmolzen zu werden.

Das Plasmaschweißen ist eine spezielle Ausführung des Wolfram-Inertgas-Schweißens, wobei wenigstes zwei unabhängige Gase bzw. Gasgemische zugeführt werden. Zum einen wird ein Plasmagas (auch Zentrumsgas genannt) eingesetzt, welches durch die hohe Temperatur und die hohe Energie des Lichtbogens (zumindest teilweise) ionisiert wird, so dass ein Plasma erzeugt wird. Ferner wird ein Außengas als Schutzgas zugeführt.

Gemäß einer Ausführungsform wird zum Herstellen des Werkstücks ein auf einem Lichtbogen basierter additiver Fertigungsprozess durchgeführt. Additive Fertigung ist ein Herstellungsverfahren, bei dem ein dreidimensionales Objekt bzw. eine dreidimensionale Struktur durch konsekutives Hinzufügen eines Werkstoffs Schicht für Schicht erzeugt wird. Dabei wird nacheinander eine neue Werkstoffschicht auf das zu fertigende Werkstück aufgetragen, verfestigt und fest mit den darunterliegenden Schichten verbunden.

Besonders zweckmäßig können durch das Vorwärmen unter Verwendung des wenigstens einen Lichtbogenbrenners Oxidschichten auf dem herzustellenden Werkstück entfernt werden, so dass die Gefahr von Lagenbindefehlern bei der Verbindung der einzelnen Werkstoffschichten reduziert oder minimiert werden kann. Ferner lassen sich durch das Vorwärmen mit Hilfe der Lichtbogenbrenner Werkstückstellen mit Schweißgutüberläufen bzw. bindeschwachen Zonen, welche nicht ausreichend mit darunterliegenden Werkstückschichten verschmolzen sind, zuverlässig erkennen, so dass diesen Stellen entgegengewirkt werden kann.

Insbesondere wird als additiver Fertigungsprozess eine direkte Energieabscheidung (engl.: "Direct Energy Deposition", DED) durchgeführt. Dabei wird auf das zu fertigende Werkstück eine neue Werkstoffschicht z.B. in Form eines Drahtes, eines Filaments, eines Pulvers, usw., aufgebracht, z.B. mittels eines beweglichen Arms. Die derart aufgebrachte Werkstoffschicht wird dann mit Hilfe des zweiten Lichtbogens des Schweißbrenners aufgeschmolzen und mit dem darunterliegenden, bereits gefertigten Teil des Werkstücks stoffschlüssig verbunden.

Insbesondere wird als additiver Fertigungsprozess ein Lichtbogendrahtauftragsschweißprozess (engl.: "Wire and Arc Additive Manufacturing", WAAM) durchgeführt. Im Zuge dieses WAAM werden einzelne Schichten mit Hilfe eines abschmelzenden Drahtes und eines Lichtbogens erzeugt. Zu diesem Zweck wird der Schweißbrenner, beispielsweise zum Metall-Schutzgas-Schweißen, verwendet, wobei zwischen dem Schweißbrenner und dem herzustellenden Werkstück der zweite Lichtbogen brennt und ein entsprechender Werkstoff z.B. in Form eines Drahtes oder Bandes kontinuierlich nachgeführt und durch den zweiten Lichtbogen aufgeschmolzen wird. Dabei bilden sich schmelzflüssige Tropfen, welche auf das herzustellende Werkstück übergehen und fest mit diesem verbunden werden. Der jeweilige Werkstoff kann beispielsweise als abschmelzende Drahtelektrode des Schweißbrenners zugeführt werden oder auch in Form eines zusätzlichen Drahtes, welcher von dem zweiten Lichtbogen des Schweißbrenners aufgeschmolzen wird.

Gemäß einer Ausführungsform ist der Lichtbogenbrenner als ein Brenner zum Wolfram-Inertgas-Schweißen oder zum Plasma-Schweißen ausgebildet. Derartige Brenner, deren jeweilige Elektrode nicht abschmilzt, eignen sich besonders zum Vorwärmen des Werkstücks. Alternativ oder zusätzlich ist der Schweißbrenner zweckmäßigerweise als ein Brenner zum Metall-Schutzgas-Schweißen, zum Metall-Aktivgas-Schweißen, zum Metall-Inertgas-Schweißen oder zum Metall-Inertgas-Dickdraht-Schweißen ausgebildet. Zum Aufschmelzen des Werkstücks nach dem Vorwärmen können zweckmäßigerweise Brenner verwendet werden, deren Elektroden abschmelzen.

Gemäß einer weiteren Ausführungsform ist das Werkstück aus Aluminium oder einer Aluminiumlegierung gefertigt. Insbesondere kann ein derartiges Aluminiumwerkstück eine Wanddicke von ca. 1 mm oder mehr aufweisen. Da Aluminium besonders schnell mit Sauerstoff reagiert und sich auf einem Aluminiumwerkstück schnell dicke Oxidschichten bilden können, bietet sich die vorliegende Erfindung besonders für Werkstücke aus Aluminium oder Aluminiumlegierungen an, da derartige Oxidschichten durch den Lichtbogenbrenner besonders effektiv zerstört werden können. Die Gefahr von Lagenbindefehlern bei derartigen Aluminiumwerkstücken kann daher reduziert oder minimiert werden. Ferner besteht bei Aluminiumwerkstücken oftmals die Gefahr von Schweißgutüberläufen bzw. bindeschwachen Zonen. Da derartige Werkstückstellen mit Hilfe der Aufwärm-Lichtbogen frühzeitig erkannt werden können, kann die Gefahr von Bindefehlern reduziert oder minimiert werden. Ferner kann das Werkstück auch aus anderen metallischen Werkstoffen gefertigt sein, z.B. aus einem Chrom-Nickel-Stahl.

In einer Ausführungsform liegt die vorgegebene Temperatur in einem Bereich zwischen 50°C und 200°C oder in einem Bereich zwischen 60°C und 150°C oder in einem zwischen 70°C und 120°C. Ein derartiger Temperaturbereich ist insbesondere bei Werkstücken aus Aluminium oder Aluminiumlegierungen mit einer Wanddicke ab ca. 1 mm zweckmäßig.

Die Erfindung betrifft weiterhin eine Vorrichtung zum Bearbeiten oder Herstellen eines Werkstücks mittels eines Lichtbogens, aufweisend einen Schweißbrenner und wenigstens einen Lichtbogenbrenner, wobei der wenigstens eine Lichtbogenbrenner in einem vorgegebenen Abstand zu dem Schweißbrenner angeordnet ist und wobei die Vorrichtung dazu eingerichtet ist, eine Ausführungsform des erfindungsgemäßen Verfahrens durchzuführen. Vorteile und Ausgestaltungen der erfindungsgemäßen Vorrichtung ergeben sich aus der obigen Beschreibung des erfindungsgemäßen Verfahrens in analoger Weise.

Die vorliegende Erfindung eignet sich zweckmäßigerweise für eine Vielzahl verschiedener Anwendungsbereiche, insbesondere zum Herstellen oder Bearbeiten von Bauteilen für verschiedene technische Vorrichtungen der Verfahrens-, Regelungs- und/oder Steuerungstechnik. Die Erfindung eignet sich insbesondere zum Herstellen oder Bearbeiten von Bauteilen der Verfahrenstechnik, z.B. von Behältern bzw. Druckbehältern oder Apparaten zur Lagerung oder zum Transport von Stoffen bzw. zur Stoff- bzw. Materieumsetzung. Besonders zweckmäßig eignet sich die Erfindung zum Herstellen oder Bearbeiten eines fluiddurchströmten bzw. fluiddurchströmbaren Bauteils für eine verfahrenstechnische Vorrichtung, beispielsweise für einen Wärmetauscher. Beispielsweise eignet sich die Erfindung zum Herstellen eines Stutzens bzw. zum Verbinden eines Stutzens mit einem Behälter oder einem Apparat. Beispielsweise kann ein derartiger Stutzen mit einem Header eines Wärmetauschers, z.B. eines Plattenwärmetauschers, verbunden werden zum Zu- und Abführen von Prozessmedien.

Beispielsweise eignet sich die vorliegende Erfindung besonders für ein mechanisches Aluminiumschweißen mit einem MIG-Schweißprozess an dickwandigen Bauteilen zum Längs- und Rundnahtschweißen sowie ferner beispielsweise zum mechanisierten Stutzeneinschweißen eines Stutzens in einem Mantel im Behälter- und Apparatebau.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine Ausgestaltung einer erfindungsgemäßen Vorrichtung, die dazu eingerichtet ist, eine Ausführungsform eines erfindungsgemäßen Verfahrens durchzuführen.
- Figur 2: zeigt schematisch eine Ausgestaltung einer erfindungsgemäßen Vorrichtung, die dazu eingerichtet ist, eine Ausführungsform eines erfindungsgemäßen Verfahrens durchzuführen.

### Detaillierte Beschreibung der Zeichnung

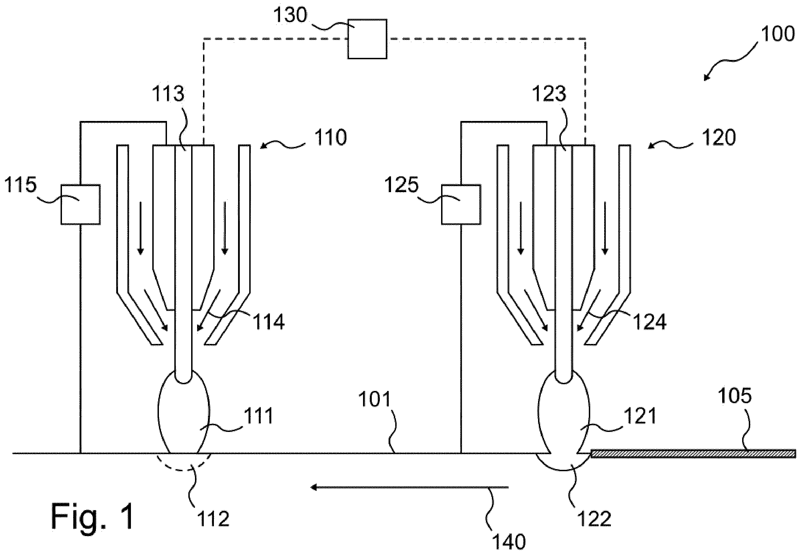

In Figur 1 ist eine Ausgestaltung einer erfindungsgemäßen Vorrichtung in einer schematischen Querschnittsansicht dargestellt und mit 100 bezeichnet, wobei die Vorrichtung 100 dazu eingerichtet ist, eine Ausführungsform eines erfindungsgemäßen Verfahrens durchzuführen.

Die Vorrichtung 100 ist zum Bearbeiten oder Herstellen eines Werkstücks 101 vorgesehen. Beispielsweise kann das Werkstück 101 mit Hilfe der Vorrichtung 100 im Zuge eines Lichtbogenschweißprozesses, z.B. eines Metall-Inertgas-Schweißprozesses (MIG-Schweißprozess), mit einem weiteren Werkstück stoffschlüssig verbunden werden. Ferner kann das Werkstück 101 mit Hilfe der Vorrichtung 100 beispielsweise auch im Zuge eines additiven Fertigungsprozesses, z.B. einer direkten Energieabscheidung (engl.: "Direct Energy Deposition", DED), hergestellt werden durch schichtweises Aufbringen von Material z.B. in Draht-, Filament- oder Pulverform und durch Aufschmelzen der zuletzt aufgebrachten Werkstoffschicht. Beispielsweise kann das herzustellend bzw. das zu bearbeitende Werkstück 101 ein Bauteil für eine verfahrenstechnische Vorrichtung sein, z.B. ein Stutzen für einen Behälter oder Apparat, z.B. ein Stutzen für einen Header eines Wärmetauschers.

Die Vorrichtung 100 weist einen Lichtbogenbrenner 110 und einen Schweißbrenner 120 auf, wobei der Lichtbogenbrenner 110 in einem vorgegebenen Abstand zu dem Schweißbrenner 120 angeordnet ist. Eine Steuereinheit 130 ist dazu eingerichtet, den Lichtbogenbrenner 110 und den Schweißbrenner 120 in Abhängigkeit voneinander anzusteuern, um die Ausführungsform des erfindungsgemäßen Verfahrens durchzuführen.

Der Schweißbrenner 120 und der Lichtbogenbrenner 110 werden entlang einer Bewegungsrichtung bzw. Schweißrichtung 140 parallel zu der Oberfläche des Werkstück 101 und relativ zu diesem bewegt, so dass der Abstand zwischen Schweißbrenner 120 und Lichtbogenbrenner 110 konstant oder zumindest im Wesentlichen konstant bleibt. Beispielsweise kann die Bewegung des Schweißbrenners 120 und des Lichtbogenbrenners 110 automatisch erfolgen und durch die Steuereinheit 130 gesteuert werden.

Beispielsweise können der Lichtbogenbrenner 110 und der Schweißbrenner 120 jeweils als ein MIG-Brenner zum Durchführen eines Metall-Inertgas-Schweißprozess ausgebildet sein, wobei diese MIG-Brenner 110, 120 durch die Steuereinheit 130 jedoch auf unterschiedliche Weisen betrieben werden. Es ist jedoch auch denkbar, dass der Lichtbogenbrenner 110 und der Schweißbrenner 120 jeweils unterschiedlich ausgestaltete Brenner sein können, welche durch die Steuereinheit 130 jeweils individuell betrieben werden. Beispielsweise kann der Schweißbrenner 120 ein MIG-Brenner sein und der Lichtbogenbrenner 110 ein Wolfram-Inertgas-Schweißbrenner.

Der Lichtbogenbrenner 110 wird derart angesteuert, dass ein erster Lichtbogen bzw. Vorwärm-Lichtbogen 111 zwischen dem Werkstück 101 und dem Lichtbogenbrenner 110 erzeugt wird, so dass das Werkstück 101 durch diesen ersten Lichtbogen 111 nicht aufgeschmolzen wird und ein vorgegebener Bereich 112 des Werkstücks 101 durch den ersten Lichtbogen 110 auf eine vorgegebene Temperatur unterhalb der Schmelztemperatur des Werkstücks 101 erwärmt bzw. vorgewärmt wird.

Zu diesem Zweck werden eine Elektrode 113 des Lichtbogenbrenners 110 und das Werkstück 101 mit einer Stromquelle 115 verbunden. Beispielsweise kann die Stromquelle 115 eine Wechselstromquelle sein, so dass der erste Lichtbogen 111 unter Verwendung von Wechselstrom erzeugt wird. Ferner kann die Stromquelle 115 auch eine Gleichspannungsquelle sein, wobei die Elektrode 113 als Pluspol verwendet wird. Um die Elektrode 113 herum wird ein Schutzgas 114 zugeführt, z.B. Argon oder ein argonhaltiges Gasgemisch.

Der Lichtbogenbrenner 110 ist beispielsweise als ein Brenner zum WIG- oder Plasma-Schweißen ausgebildet, wobei der Lichtbogen 111 entsprechend einem WIG- bzw. Plasma-Schweißprozess zwischen der Elektrode 113 und dem Werkstück 101 gezündet wird, jedoch mit einem derart geringen Strom aufrechterhalten wird, so dass es zu keinem Aufschmelzen des Werkstücks 101 und zu keinem Abschmelzen der Elektrode 113 kommt.

Der Schweißbrenner 120 wird derart angesteuert, dass ein zweiter Lichtbogen bzw. Arbeits-Lichtbogen oder Bearbeitungs-Lichtbogen 121 zur Bearbeitung des Werkstücks 101 zwischen dem Werkstück 101 und dem Schweißbrenner 120 erzeugt wird, so dass der zuvor auf die vorgegebene Temperatur erwärmte vorgegebene Bereich des Werkstücks 101 durch den zweiten Lichtbogen 121 zumindest teilweise aufgeschmolzen wird. In diesem Bereich wird dann durch den zweiten Lichtbogen 121 ein Schweißbad bzw. Schmelzbad 122 aus schmelzflüssigem Material des Werkstücks 101 erzeugt.

Es versteht sich, dass in der Darstellung von Figur 1 der mit dem Bezugszeichen 112 bezeichnete Bereich gerade von dem ersten Lichtbogen 111 auf die vorgegebene Temperatur vorgewärmt wird. Der Lichtbogenbrenner 110 wird nach dieser Vorwärmung von dem Bereich 112 in der Bewegungsrichtung 140 wegbewegt und entsprechend wird der Schweißbrenner 120 zu diesem Bereich 112 hinbewegt und dann durch den zweiten Lichtbogen 121 aufgeschmolzen. Ferner versteht sich, dass der Bereich des Werkstücks 101 in Figur 1, in welchem gerade durch den zweiten Lichtbogen 112 das Schmelzbad erzeugt wird, zuvor als entsprechender vorgegebener Bereich von dem ersten Lichtbogen 111 auf die vorgegebene Temperatur vorgewärmt wurde, als sich der Lichtbogenbrenner 110 noch an dieser Position befand.

Zum Erzeugen des zweiten Lichtbogens 121 werden eine Elektrode 123 des Schweißbrenners 120 und das Werkstück 101 mit einer entsprechenden Stromquelle 125 verbunden. Auch um die Elektrode 123 herum wird ein Schutzgas 124 zugeführt, z.B. Argon oder ein argonhaltiges Gasgemisch. Beispielsweise ist der Schweißbrenner 120 als ein Brenner zum MIG-Schweißen ausgebildet, wobei dieser MIG-Brenner 120 derart betrieben wird, dass ein regulärer MIG-Schweißprozess durchgeführt wird, im Zuge dessen das Werkstück 101 und die Elektrode 123 schmelzen.

Durch Bewegen des Schweißbrenner 120 entlang der Schweißrichtung 140 wird nach Erkalten und Aushärten des Schweißbads eine Schweißnaht 105 erzeugt, die in Figur 1 schematisch angedeutet ist.

Die Erfindung ermöglicht es, das Werkstück 101 vor dem eigentlichen Schweißprozess mittels des Schweißbrenners 120 auf aufwandsarme, praktikable und kostengünstige Weise mit Hilfe des Lichtbogenbrenners 110 vorzuwärmen, so dass Eigenschaften des Schweißprozesses und der im Zuge des Schweißprozesses erzeugten Schweißnaht 105 positiv beeinflusst werden können. Durch den Lichtbogenbrenner 110 kann ausreichend Wärme in den zu schweißenden Bereich eingebracht werden, der anschließend mittels des Schweißbrenners 120 aufgeschmolzen werden soll. Durch die Verwendung des Lichtbogenbrenners 110 kann auf die Verwendung von kostenintensiven Vorwärmmethoden verzichtet werden, z.B. mittels Autogenflamme oder induktivem Vorwärmen. Ferner ist es durch das ausreichende Vorwärmen mittels des Lichtbogenbrenners 110 nicht nötig, Helium oder ein heliumhaltiges Gas als Schutzgas zu verwenden. Stattdessen kann kostengünstigeres Argon als Schutzgas 114, 124 für die Brenner 110, 120 verwendet werden.

Das Werkstück 101 kann beispielsweise aus Aluminium oder einer Aluminiumlegierung gefertigt sein und eine Wanddicke von 1 mm oder mehr aufweisen. Da Aluminium besonders schnell mit Sauerstoff reagiert, kann sich auf dem Werkstück 101 schnell eine dicke Oxidschicht bilden. Durch das Vorwärmen des Werkstücks 101 mit Hilfe des Lichtbogenbrenners 110 kann diese Oxidschicht besonders effektiv vor dem Schweißprozess zerstört werden, wodurch die Qualität des Schweißprozesses und der erzeugten Schweißnaht 105 erhöht werden kann. Die vorgegebene Temperatur, auf welche der vorgegebene Bereich durch den ersten Lichtbogen 111 vorgewärmt wird, kann in beispielsweise zwischen 70°C und 120°C betragen. Ferner kann durch derartiges Vorwärmen die Gefahr von Lagenbindefehlern reduziert oder minimiert werden. Auch die Gefahr von Schweißgutüberläufen bzw. bindeschwachen Zonen kann verringert werden, da derartige Werkstückstellen mit Hilfe des Aufwärm-Lichtbogen 111 frühzeitig erkannt werden können.

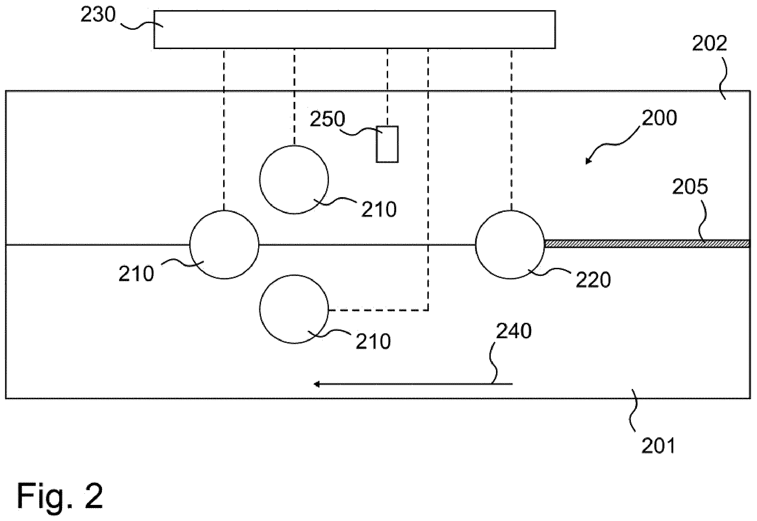

Figur 2 zeigt eine bevorzugte Ausgestaltung der erfindungsgemäßen Vorrichtung 200 in einer schematischen, vereinfachten Draufsicht, die dazu eingerichtet ist, eine bevorzugte Ausführungsform des erfindungsgemäßen Verfahrens durchzuführen.

Mit Hilfe der Vorrichtung 200 soll ein Werkstück 201 mit einem weiteren Werkstück 202 im Zuge eines Lichtbogenschweißprozesses stoffschlüssig verbunden werden, z.B. im Zuge eines MIG-Schweißprozesses.

Wie auch die Vorrichtung 100 aus Figur 1 weist die Vorrichtung 200 zu diesem Zweck einen Schweißbrenner 220 auf, der entsprechend dem in Figur 1 gezeigten Schweißbrenner 120 einen zweiten Lichtbogen bzw. Arbeits-Lichtbogen erzeugt, so dass die Werkstücke 201, 202 zumindest teilweise aufgeschmolzen werden. Aus Gründen der Übersichtlichkeit ist dieser zweite Lichtbogen in der vereinfachten Draufsicht der Figur 2 nicht explizit dargestellt.

Ferner weist die Vorrichtung 200 drei Lichtbogenbrenner 210 auf, die jeweils in einem vorgegebenen Abstand in Schweißrichtung 240 betrachtet vor dem Schweißbrenner 220 angeordnet sind. Entsprechend dem in Figur 1 gezeigten Lichtbogenbrenner 110 wird von jedem der in Figur 2 gezeigten Lichtbogenbrenner 210 jeweils ein erster Lichtbogen bzw. Vorwärm-Lichtbogen erzeugt, so dass durch diese ersten Lichtbögen ein entsprechender vorgegebener Bereich der Werkstücke 201, 202 auf eine vorgegebene Temperatur unterhalb der Schmelztemperatur des jeweiligen Werkstücks 201, 202 erwärmt bzw. vorgewärmt und nicht aufgeschmolzen wird. Auch diese ersten Lichtbögen sind aus Gründen der Übersichtlichkeit in Figur 2 nicht explizit dargestellt.

Durch manuelles oder automatisiertes Bewegen des Schweißbrenners 220 entlang einer Bewegungs- bzw. Schweißrichtung 240 wird eine Schweißnaht 205 als stoffschlüssige Verbindungsstelle der Werkstücke 201, 202 erzeugt. Auch diese Lichtbogenbrenner 210 werden entlang der Bewegungs- bzw. Schweißrichtung 240 bewegt, so dass der jeweilige vorgegebene Abstand des jeweiligen Lichtbogenbrenners 210 zu dem Schweißbrenner 220 zumindest im Wesentlichen konstant aufrechterhalten wird.

Die Lichtbogenbrenner 210 sind in einem vorgegebenen Muster derart relativ zu dem Schweißbrenner 220 angeordnet, dass abhängig von Materialdicke und Materialzusammensetzung der Werkstücks 201, 202 ein bestmögliches Vorwärmen des vorgegebenen zu schweißenden Bereichs ermöglicht werden kann.

Entsprechend dem Lichtbogenbrenner 110 aus Figur 1 können auch die Lichtbogenbrenner 210 aus Figur 2 jeweils als Brenner zum WIG- oder Plasma-Schweißen ausgebildet sein. Beispielsweise können diese drei Lichtbogenbrenner 210 jeweils als unterschiedliche, individuelle Brenner vorgesehen sein. Entsprechend dem Schweißbrenner 120 aus Figur 1 ist auch der Schweißbrenner 220 aus Figur 2 als ein MIG-Brenner ausgebildet.

Eine Steuereinheit 230 ist dazu eingerichtet, die Lichtbogenbrenner 210 und den Schweißbrenner 220 in Abhängigkeit voneinander anzusteuern, um die jeweiligen Lichtbögen zu erzeugen und um die bevorzugte Ausführungsform des erfindungsgemäßen Verfahrens durchzuführen.

Ferner weist die Vorrichtung 200 eine Überprüfungseinheit 250 in einem zweiten vorgegebenen Abstand zu dem Schweißbrenner 220 auf, die insbesondere zwischen einem der Lichtbogenbrenner 210 und dem Schweißbrenner 220 angeordnet ist. Beispielsweise kann als Überprüfungseinheit 250 eine (Vorlauf-) Kamera, eine Wirbelstrom-Überprüfungseinheiten und/oder eine Ultraschall-Überprüfungseinheiten vorgesehen sein. Die Überprüfungseinheit 250 führt eine Überprüfung der Werkstücke 201, 202 auf bindeschwache Zonen bzw. auf Schweißgutüberläufe durch. Da sich Schweißgutüberläufe bzw. bindeschwache Zonen durch die Vorwärm-Lichtbögen der Lichtbogenbrenner 210 leicht öffnen, können diese durch die Überprüfungseinheit 250 zuverlässig erkannt werden. Der nachfolgende Schweißbrenner 220 kann entsprechend auf diese Stellen reagieren, z.B. um diese Stellen vollständig aufzuschmelzen. Aufwendiges Schleifen von Raupenrändern bzw. Schweißnahträndern ist dadurch nicht nötig.

### Bezugszeichenliste

- 100: Vorrichtung
- 101: Werkstück
- 105: Schweißnaht

- 110: Lichtbogenbrenner
- 111: erster Lichtbogen
- 112: vorgegebener Bereich des Werkstücks
- 113: Elektrode
- 114: Schutzgas
- 115: Stromquelle
- 120: Schweißbrenner
- 121: zweiter Lichtbogen
- 122: Schweißbad
- 113: Elektrode
- 124: Schutzgas
- 125: Stromquelle
- 130: Steuereinheit
- 140: Bewegungsrichtung, Schweißrichtung

- 200: Vorrichtung
- 201: Werkstück
- 202: weiteres Werkstück
- 205: Schweißnaht
- 210: Lichtbogenbrenner
- 220: Schweißbrenner
- 230: Steuereinheit
- 240: Bewegungsrichtung, Schweißrichtung
- 250: Überprüfungseinheit

## Patentansprüche

1. Verfahren zum Bearbeiten oder Herstellen eines Werkstücks (101, 201) mittels eines Lichtbogens, umfassend die Schritte:
Anordnen wenigstens eines Lichtbogenbrenners (110, 210) in einem vorgegebenen Abstand zu einem Schweißbrenner (120, 220);
Erzeugen jeweils eines ersten Lichtbogens (111) zwischen dem Werkstück (101, 201) und dem wenigstens einen Lichtbogenbrenner (110, 210) und Erwärmen eines vorgegebenen Bereichs des Werkstücks (101, 201) durch den ersten Lichtbogen (111) auf eine vorgegebene Temperatur unterhalb der Schmelztemperatur des Werkstücks (101, 201);
Erzeugen eines zweiten Lichtbogens (121) zwischen dem Werkstück (101, 201) und dem Schweißbrenner (120, 220), so dass zumindest ein Teil des auf die vorgegebene Temperatur erwärmten vorgegebenen Bereichs des Werkstücks (101, 201) durch den zweiten Lichtbogen (121) aufgeschmolzen wird.

2. Verfahren nach Anspruch 1, ferner umfassend:
Bewegen des Schweißbrenners (120, 220) in einer Bewegungsrichtung (140, 240) parallel zur der Oberfläche des Werkstücks (101, 201) und relativ zu diesem und
Bewegen des wenigstens einen Lichtbogenbrenners (110, 210) in der Bewegungsrichtung (140, 240) relativ zu dem Werkstück (101, 201) in dem vorgegebenen Abstand vor dem Schweißbrenner (120, 220).

3. Verfahren nach Anspruch 2, wobei das Bewegen des Schweißbrenners (120, 220) derart erfolgt, dass der Schweißbrenner (120, 220) auf den durch den ersten Lichtbogen (111) auf die vorgegebene Temperatur erwärmten vorgegebenen Bereich zu bewegt wird.

4. Verfahren nach einem der vorstehenden Ansprüche, ferner umfassend:
Erzeugen des ersten Lichtbogens (111) zwischen dem Werkstück (101, 201) und dem wenigstens einen Lichtbogenbrenner (110, 210) unter Verwendung von Wechselstrom oder durch Erzeugen einer Pluspolung einer Elektrode (113) des wenigstens einen Lichtbogenbrenners (110, 210).

5. Verfahren nach einem der vorstehenden Ansprüche, ferner umfassend:
Anordnen einer Überprüfungseinheit (250) in einem zweiten vorgegebenen Abstand zu dem Schweißbrenner (220) und
Durchführen einer Überprüfung des Werkstücks (201) auf bindeschwache Zonen mit Hilfe der Überprüfungseinheit (250).

6. Verfahren nach Anspruch 5, ferner umfassend:
Anordnen der Überprüfungseinheit (250) zwischen dem wenigstens einen Lichtbogenbrenner (210) und dem Schweißbrenner (220).

7. Verfahren nach Anspruch 5 oder 6, wobei die Überprüfungseinheit (250) als eine Kamera und/oder als eine Wirbelstrom-Überprüfungseinheit und/oder als eine Ultraschall-Überprüfungseinheit ausgebildet ist.

8. Verfahren nach einem der vorstehenden Ansprüche, ferner umfassend:
Anordnen von wenigstens zwei Lichtbogenbrennern (210) als der wenigstens eine Lichtbogenbrenner in einem vorgegebenen Muster relativ zu dem Schweißbrenner (220).

9. Verfahren nach einem der vorstehenden Ansprüche, ferner umfassend:
Betreiben des Schweißbrenners (120, 220) und/oder des wenigstens einen Lichtbogenbrenners (110, 210) jeweils mit Argon oder einem argonhaltigen Gasgemisch als Schutzgas (114, 214).

10. Verfahren nach einem der vorstehenden Ansprüche, ferner umfassend:
Durchführen eines Lichtbogenschweißprozesses zum Bearbeiten des Werkstücks (101, 201), insbesondere eines Metall-Schutzgas-Schweißprozesses, eines Metall-Aktivgas-Schweißprozesses, eines Metall-Inertgas-Schweißprozesses, eines Metall-Inertgas-Dickdraht-Schweißprozesses, eines Metall-Inertgas-Hochstrom-Schweißprozesses, eines Wolfram-Inertgas-Schweißprozesses oder eines Plasma-Schweißprozesses.

11. Verfahren nach einem der vorstehenden Ansprüche, ferner umfassend:
Durchführen eines additiven Fertigungsprozesses zum Herstellen des Werkstücks (101, 201), insbesondere einer direkten Energieabscheidung oder eines Lichtbogendrahtauftragsschweißprozesses.

12. Verfahren nach einem der vorstehenden Ansprüche, wobei der wenigstens eine Lichtbogenbrenner (110, 210) als ein Brenner zum Wolfram-Inertgas-Schweißen oder zum Plasma-Schweißen ausgebildet ist und/oder wobei der Schweißbrenner (120, 220) als ein Brenner zum Metall-Schutzgas-Schweißen, zum Metall-Aktivgas-Schweißen, zum Metall-Inertgas-Schweißen oder zum Metall-Inertgas-Dickdraht-Schweißen ausgebildet ist.

13. Verfahren nach einem der vorstehenden Ansprüche, wobei das Werkstück (101, 202) aus Aluminium oder einer Aluminiumlegierung gefertigt ist.

14. Verfahren nach einem der vorstehenden Ansprüche, wobei die vorgegebene Temperatur in einem Bereich zwischen 50°C und 200°C oder in einem Bereich zwischen 60°C und 150°C oder in einem Bereich zwischen 70°C und 120°C liegt.

15. Vorrichtung (100, 200) zum Bearbeiten oder Herstellen eines Werkstücks (101, 201) mittels eines Lichtbogens, aufweisend einen Schweißbrenner (120, 220) und wenigstens einen Lichtbogenbrenner (110, 210), wobei der wenigstens eine Lichtbogenbrenner (110, 210) in einem vorgegebenen Abstand zu dem Schweißbrenner (120, 220) angeordnet ist und wobei die Vorrichtung (100, 200) dazu eingerichtet ist, ein Verfahren nach einem der vorstehenden Ansprüche durchzuführen.
